# EUROPEAN PATENT APPLICATION

(11) **EP 4 567 065 A1**
(43) Date of publication of application: **11.06.2025**
(21) Application number: 23383266.6
(22) Date of filing: 07.12.2023
(51) Int. Cl.: C08L 23/04

(54) **POLYMER BLEND FOR REDUCING GEL COUNT IN FORMULATIONS CONTAINING RECYCLED POLYMER**

(71) Applicant: Dow Global Technologies LLC, Midland, MI 48674 (US)
(72) Inventor: GARG, Akanksha, Texas, 77566 (US); ZENG, Yongchao, Texas, 77056 (US); VILLAN, Maria Isabel Arroyo, 43006 Tarragona (ES); TSAI, Carol, Texas, 77566 (US); THURBER, Christopher M., Michigan, 48674 (US); KRASOVSKIY, Arkady L., Texas, 77566 (US); KROIJENGA, Pieter Jetze, 43006 Tarragona (ES); QIAO, Yusen, Texas, 77566 (US)
(74) Representative: Elzaburu S.L.P.

(57) **Abstract**

Embodiments are directed to a polymer blend comprising: virgin ethylene-based polymer formed by high pressure (greater than or equal to 100 MPa and less than or equal to 400 MPa), free-radical polymerization of ethylene and one or more hydrocarbon-based molecules, each hydrocarbon-based molecule comprising three or more terminal alkene groups; and recycled ethylene-based polymer having a density of 0.910 to 0.940 g/cc and a melt index (I₂) of 0.3 to 5 dg/min as measured according to ASTM D1238 (190°C, 2.16 Kg). Further embodiments are directed to films and articles incorporating the polymer blend.

## Description

### TECHNICAL FIELD

Embodiments of the present disclosure generally relate to polymer blends and films produced therefrom comprising recycled polymer, more specifically to polymer blend formulations that reduce gel count in polymer blends containing recycled polymer.

### BACKGROUND

Recycled polymer materials play an increasingly larger role in environmentally sustainability initiatives and efforts in the packaging industry today. Recycled polymer provides a way for industries to reprocess and reincorporate materials into consumer articles, which limits the consumption of new resources, permits the reuse of old materials, and sustainably creates the production of new articles. However, due to the multiple melt processing steps and potential cross-contamination associated with the manufacturing, use, and recycling processes, recycled polymer and its properties can have a high degree of variability in each lot, batch, or individual resin, and its precise constituents, composition, and corresponding characteristics and properties often fluctuate.

One particular concern is the presence of cross-linked gels. Gels may be any localized film defect resulting from oxidized resin, inorganic agglomerates, and more. Gels may range in size from a few microns to several millimeters. These gels lead to deteriorated properties and inconsistencies when making films containing recycled polymer. Accordingly, there is a need to reduce gel count in polymer blends containing recycled polymer and films produced therefrom.

### SUMMARY

Embodiments of the present disclosure meet this need for reduced gel count in polymer blends and films. These polymer blends may comprise virgin ethylene-based polymer formed by high pressure (greater than or equal to 100 MPa), free-radical polymerization of ethylene and one or more hydrocarbon-based molecules, with each hydrocarbon-based molecule comprising three or more terminal alkene groups; and recycled ethylene-based polymer having a density of 0.910 g/cc to 0.940 g/cc and a melt index of 0.3 g/10 min to 5.0 g/10 min, as measured according to ASTM D1328 (at 190 °C, 2.16 kg).

Also disclosed herein is an article comprising the polymer blend. The article may be a film or a coated article. The film may be a monolayer or multilayer film. Further, disclosed herein, is a coating comprising the polymer blend.

It is to be understood that both the foregoing and the following description describes various embodiments and are intended to provide an overview or framework for understanding the nature and character of the claimed subject matter.

### DETAILED DESCRIPTION

### Definitions

As used herein, the term "polyethylene" or "ethylene-based polymer" shall mean polymers comprising greater than 50% by mole of units which have been derived from ethylene monomer. This includes polyethylene homopolymers or copolymers (meaning units derived from two or more comonomers). Common forms of polyethylene known in the art include low density polyethylene (LDPE); linear low density polyethylene (LLDPE); medium density polyethylene (MDPE); and high density polyethylene (HDPE).

The term "blend" or "polymer blend" as used herein, refers to a mixture of two or more polymers. A blend may or may not be miscible (not phase separated at molecular level). A blend may or may not be phase separated. A blend may or may not contain one or more domain configurations, as determined from transmission electron spectroscopy, light scattering, x-ray scattering, and other methods known in the art. The blend may be effected by physically mixing the two or more polymers on the macro level (for example, melt blending resins or compounding), or the micro level (for example, simultaneous forming within the same reactor).

The term "hydrocarbon-based molecule" as used herein, refers to a chemical component that has only carbon atoms and hydrogen atoms.

As used herein, "recycled polymer" refers to polymers, which were incorporated into products and subsequently re-melted to form a recycled polymer. The term "recycled polymer" refers to mechanically recycled polymers, where the polymer is melted and reincorporated into a new product. "Recycled polymer" does not include chemically recycled polymers, where the polymer is broken down into constituent monomers and incorporated into a new virgin polymer. The term "recycled polymer" embraces both pre-consumer recycled polymer and post-consumer recycled polymer. Recycled polymers are defined in ISO 14021 7.8.1.1.

The terms "pre-consumer recycled polymer" and "post-industrial recycled polymer" refer to polymers, including blends of polymers, recovered from pre-consumer material, as defined by ISO-14021. The generic term pre-consumer recycled polymer thus includes blends of polymers recovered from materials diverted from the waste stream during a manufacturing process. The generic term pre-consumer recycled polymer excludes the reutilization of materials, such as rework, regrind, or scrap, generated in a process and capable of being reclaimed within the same process that generated it. Pre-consumer recycled polymer is defined in ISO 14021 7.8.1.1.

The term "post-consumer recycled" (or "PCR"), as used herein, refers to a polymeric material that includes materials previously used in a consumer or industry application (i.e., pre-consumer recycled polymer and post-industrial recycled polymer). PCR is typically collected from recycling programs and recycling plants. The PCR ethylene-based polymer may include one or more of ethylene-based polymers, such as LDPE, LLDPE, HDPE, or polyethylene. The PCR may include one or more contaminants. The contaminants may be the result of the polymeric material's use prior to being repurposed for reuse. For example, contaminants may include paper, ink, food residue, or other recycled materials in addition to the polymer, which may result from the recycling process. PCR is distinct from virgin polymeric material. A virgin polymeric material (such as a virgin polyethylene resin) does not include materials previously used in a consumer or industry application. Virgin polymeric material has not undergone, or otherwise has not been subject to, a heat process or a molding process, after the initial polymer manufacturing process. The physical, chemical, and flow properties of PCR resins differ when compared to virgin polymeric resin, which in turn can present challenges to incorporating PCR into formulations for commercial use. Post-consumer resin is defined in ISO 14021 7.8.1.1.

The term "virgin ethylene-based polymer", as used herein, refers to materials that do not include materials previously used in a consumer or industry application. Thus, recycled polymeric materials are distinct from virgin polymeric materials. Virgin polymeric material has not undergone, or otherwise has not been subject to, a heat process or a molding process, like a typical recycled polymer material. The physical, chemical, and flow properties of recycled resins differ when compared to virgin polymeric resin, which in turn can present challenges to incorporating PCR materials into formulations for commercial use.

The term "low density polyethylene" (or "LDPE") may also be referred to as "high pressure ethylene polymer" or "highly branched polyethylene" and is defined to mean that the polymer is partly or entirely homopolymerized or copolymerized in autoclave or tubular reactors at pressures above 14,500 psi (100 MPa) with the use of free-radical initiators, such as peroxides (see for example U.S. Pat. No. 4,599,392). LDPE resins typically have a density in the range of 0.915 to 0.935 g/cm³, and long chain branches with a broad molecular weight distribution (for example, greater than 3.0).

The term "linear low density polyethylene" (or "LLDPE") as used herein, refers to a linear ethylene/α-olefin copolymer containing heterogeneous short-chain branching distribution comprising units derived from ethylene and units derived from at least one C₃-C₁₀ α-olefin, or C₄-Cs α-olefin comonomer. LLDPE is characterized by little, if any, long chain branching, in contrast to conventional LDPE. LLDPE has a density of from 0.910 g/cc to less than 0.940 g/cc. Non limiting examples of LLDPE include DOWLEX^{™} polyethylene resins, available from The Dow Chemical Company.

The term "terminal alkene group", as used herein, refers to a double bond between two carbon atoms in a polymer chain, wherein one of the carbons in the double bond is a =CH₂ group. Terminal double bonds are located at terminal ends of polymer chains and/or at branched ends of polymer chains. The term "internal alkene group", as used herein, refers to a 1,2-disubstituted carbon-carbon double bond, the carbon atoms are in a trans-configuration (not cis-configuration). An internal alkene group is located throughout the length of a polymer chain, but not at a terminal end of the polymer chain or at a branched end along a polymer chain. Terminal alkene groups and internal alkene groups are measured by infrared spectroscopy ("IR").

Specific embodiments of the present application will now be described. Generally, described in this disclosure are various embodiments of polymer blends. In embodiments, the polymer blend comprises virgin ethylene-based polymer and recycled ethylene-based polymer. The virgin ethylene-based polymer may be formed by high pressure, free-radical polymerization of ethylene and one or more hydrocarbon-based molecules, each hydrocarbon-based molecule comprising three or more terminal alkene groups. High pressure may be greater than or equal to 100 MPa to less than or equal to 400 MPa.

In embodiments, the recycled ethylene-based polymer may have a density of 0.910 to 0.940 g/cc and a melt index (I₂) of 0.3 to 5 dg/min as measured according to ASTM D1238 (at 190 °C, 2.16 kg). The recycled ethylene-based polymer may include post-consumer recycled (PCR) material or post-industrial recycled (PIR) material.

Various compositions are contemplated for the recycled ethylene-based polymer resin. In one or more embodiments, the recycled ethylene-based polymer may comprise recycled low density polyethylene (LDPE) resin, recycled linear low density polyethylene (LLDPE) resin, or combinations thereof.

In embodiments described herein, the recycled ethylene-based polymer may have a density of 0.910 g/cc to 0.940 g/cc. All individual values and subranges of at least 0.910 g/cc to 0.940 g/cc are included and disclosed herein. For example, in some embodiments, the recycled ethylene-based polymer has a density of from 0.910 g/cc to 0.935 g/cc, from 0.915 g/cc to 0.935 g/cc, from 0.920 g/cc to 0.935 g/cc, or from 0.920 g/cc to 0.930 g/cc.

In addition to the density, the recycled ethylene-based polymer may have a melt index (I₂) of 0.3 g/10 min to 5.0 g/10 min. All individual values and subranges of at least 0.3 g/10 min to 5.0 g/10 min are included and disclosed herein. For example, and in some embodiments, the recycled ethylene-based polymer may have a melt index of from 0.3 g/10 min to 4.0 g/10 min, from 0.3 g/10 min to 3.0 g/10 min, from 0.3 g/10 min to 2.0 g/10 min, or from 0.3 g/10 min to 1.0 g/10 min. Melt index may be measured in accordance with ASTM D1238 (at 190 °C, 2.16 kg).

In further embodiments, the polymer blend may comprise from 15 wt.% to 95 wt.% of the recycled ethylene-based polymer. For example, and in embodiments, the polymer blend may comprise recycled ethylene-based polymer in an amount from 15 wt.% to 25 wt.%, from 25 wt.% to 35 wt.%, from 35 wt.% to 45 wt.%, from 45 wt.% to 55 wt.%, from 55 wt.% to 65 wt.%, from 65 wt.% to 75 wt.%, from 75 wt.% to 85 wt.%, from 85 wt.% to 95 wt.%, or any combination of these ranges.

The polymer blend may also comprise from 5 wt.% to 85 wt.% of the virgin ethylene-based polymer. For example, and in embodiments, the polymer blend may comprise virgin ethylene-based polymer in an amount from 5 wt.% to 15 wt.%, from 15 wt.% to 25 wt.%, from 25 wt.% to 35 wt.%, from 35 wt.% to 45 wt.%, from 45 wt.% to 55 wt.%, from 55 wt.% to 65 wt.%, from 65 wt.% to 75 wt.%, from 75 wt.% to 85 wt.%, or any combination of these ranges.

As disclosed hereinabove, the virgin ethylene-based polymer may be formed by high pressure, free-radical polymerization of ethylene and one or more hydrocarbon-based molecules, with each hydrocarbon-based molecule comprising three or more terminal alkene groups. The hydrocarbon-based molecules have only carbon atoms and hydrogen atoms, and have three or more terminal alkene groups. The term "hydrocarbon-based molecules comprising three or more terminal alkene groups" as used herein, refers to a chemical component that is a polymer chain composed of only carbon atoms and hydrogen atoms, the polymer chain being branched and having three or more terminal ends wherein an alkene group (i.e., carbon-carbon double) bond is present at each terminal end. The term "mixture of hydrocarbon-based molecules", as used herein, refers to two or more hydrocarbon-based molecules, wherein at least two of the molecules differ in structure, property, and/or composition. Additional details for making these virgin resins is provided PCT Publications WO2020112873A1, WO2020112873A1, WO2021108131A1, WO2021108132A1, and WO2021108134A1, which are all incorporated by reference herein in their entirety.

Without being limited by theory, it was surprisingly found that incorporating the hydrocarbon-based molecules comprising three or more terminal alkene groups greatly reduced the gel content of film comprising a polymer blend of these virgin resins and recycled polyethylene.

In one or more embodiments, the number of terminal alkene groups present in each of the hydrocarbon-based molecules may be from 3, from 5, from 7, from 8 to 17, from 18, or any combination of these ranges. In a further embodiment, the number of terminal alkene groups present in each of the hydrocarbon-based molecules may be from 3 to 40, from 5 to 40, from 10 to 40, from 12 to 20, or any combination of these ranges. For example, the mixture of hydrocarbon-based molecules may include a first hydrocarbon-based molecule having three terminal alkene groups and a second hydrocarbon-based molecule having twelve terminal alkene groups.

The hydrocarbon-based molecule may comprise Structure I below, wherein n is the number of terminal alkene groups and m is the number of internal alkene groups.

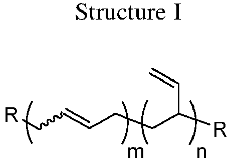

In one or more embodiments comprising Structure I, R = H or OH, n is from 3 to 160 and m is from 0 to 50. For example, and in embodiments, n is from 3, or 5, or 10, or 20, or 30, or 40, and m is from 0, or 10, or 20, or 40, or 50. In further embodiments, n is from 3 to 160, or from 5 to 100, or from 9 to 40, and m is from 0 to 30, or from 1 to 20, or from 2 to 10.

The hydrocarbon-based molecule may further comprise Structure II below: 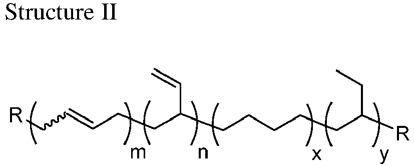 wherein R = H or OH, n is from 3 to 160, m is from 0 to 50, x is from 0 to 160, and y is from 0 to 50. In another embodiment, n is from 3, or 5, or 10, or 20, or 30, or 40, or 50 to 60, or 70 to 80, or 90, or 100, or 110, or 120, or 130, or 140, or 150, or 160, and m is from 0, or 10, or 20 to 30, or 40, or 50 to 60, or 70 to 80, or 90, or 100, or 110, or 120, or 130, or 140, or 150, or 160, and y is from 0, or 1, or 10, or 20 to 30, or 40, or 50, or any combination of ranges.. In a further embodiment, n is from 3 to 160, or from 5 to 150, or from 9 to 140, or from 9 to 100, or from 9 to 50, or from 9 to 30, m is from 0 to 30, or from 1 to 20, or from 1 to 10, x is from 0 to 160, or from 1 to 50, or from 1 to 20, or from 1 to 10, and y is from 0 to 50, or from 1 to 20, or from 1 to 10, or any combination of ranges.

The notation " 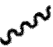 " in Structure I and in Structure II represents a cis alkyl group or a trans alkyl group with respect to the double bond.

In one or more embodiments, a mixture of hydrocarbon-based molecules having the Structure I and/or the Structure II, with differing molecular weights, is used. It is understood that the term "mixture of hydrocarbon-based molecules", as used herein, may include (i) Structure I only, (ii) Structure II only, or (iii) a combination of Structure I and Structure II.

As stated hereinabove, the virgin polyethylene-based polymer may comprise one or more hydrocarbon-based molecules. The hydrocarbon-based molecules may be based on Structures I or II and/or may be a mixture of hydrocarbon-based molecules. In embodiments described herein, the mixture of hydrocarbon-based molecules may have a molecular weight distribution (M_{w}/Mₙ) of from 1.2 to 10.0. All individual values and subranges of from 1.2 to 10.0 are included and disclosed herein. For example, and in some embodiments, the hydrocarbon-based molecules may have a molecular weight distribution from a lower limit 1.5, 2.0, 3.5, 4.0, 4.5, 5.0, 5.5, or 6.0 to an upper limit of 10.0, 9.5, 9.0, 8.5, or 8.0. Molecular weight distribution can be described as the ratio of weight average molecular weight (M_{w}) to number average molecular weight (Mₙ) (i.e., M_{w}/Mₙ), and can be measured by gel permeation chromatography techniques.

In one or more embodiments, the virgin ethylene-based polymer may comprise, in polymerized form, from 95 wt.% to 99.98 wt.% of ethylene and from 0.02 wt.% to 5.0 wt.% of the mixture of hydrocarbon-based molecules. For example, the virgin ethylene-based polymer composition may comprise, in polymerized form, from 95 wt.%, or 96 wt.%, or 97 wt.%, or 98 wt.% to 99 wt.%, or 99.5 wt.%, or 99.7 wt.%, or 99.9 wt.% of ethylene, and a reciprocal amount of the mixture of hydrocarbon-based molecules, or from 5.0 wt.%, or 4.0 wt.%, or 3.0 wt.%, or 2.0 wt.% to 1.0 wt.%, or 0.5 wt.%, or 0.3 wt.%, or 0.1 wt.% of the mixture of the hydrocarbon-based molecules, or any combination of these ranges. Weight percent is based on total weight of the virgin ethylene-based polymer. In a further embodiment, the virgin ethylene-based polymer includes, in polymerized form, from 95.0 wt.% to 99.9 wt.%, or from 96 wt.% to 99.8 wt.%, or from 98 wt.% to 99.8 wt.% of ethylene, and the mixture of hydrocarbon-based molecules is present in an amount from 5.0 wt.% to 0.1 wt.%, or from 4.0 wt.% to 0.2 wt.%, or from 2.0 wt.% to 0.2 wt.%, or any combination of these ranges.

In one or more embodiments, the virgin ethylene-based polymer may have an alkenes content from 0.05/1000 carbons to 3.0/1000 carbons, or from 0.07/1000 carbons to 2.0/1000 carbons, or from 0.1/1000 carbons to 1.2/1000 carbons. Alkene content can be measured by Fourier Transform Infrared (FTIR) Spectrocopy as detailed below and/or Proton Nuclear Magnetic Resonance (¹H NMR).

In one or more embodiments, the virgin ethylene-based polymer composition may be a low density polyethylene (LDPE) comprising, in polymerized form, ethylene monomer and the hydrocarbon-based molecules.

In one or more embodiments, the virgin ethylene-based polymer composition may have a melt index (MI) of from 0.1 to 10.0 g/10 min. All individual values and subranges of at least 0.1 g/10 min to 10.0 g/10 min are included and disclosed herein. For example, and in some embodiments, the virgin ethylene-based polymer composition may have a melt index of from 0.1 g/10 min to 8.0 g/10 min, from 0.1 g/10 min to 6.0 g/10 min, from 0.1 g/10 min to 4.0 g/10 min, from 0.1 g/10 min to 2.0 g/10 min, or any combination of these ranges. Melt index may be measured in accordance with ASTM D1238 (at 190 °C, 2.16 kg).

Optional additives may be included in the polymer blend. For example, known to the skilled in art antioxidants, hindered amine light stabilizers (HALS), inorganic fillers, slip agents, metal oxides, and zeolites.

Also disclosed herein is an article comprising the polymer blend as described hereinabove. In one embodiment, the article may be a film or a coated article. The film may be a monolayer or multilayer film. The films may be produced via blown film or cast film processing. Various films are considered suitable, for example and not by way of limitation, collation shrink films, laminates, stretch films, etc. The article may also comprises molded articles, such as blow molded, injection molded, or rotomolded articles; fibers; and woven or non-woven fabrics.

In another embodiment, the article may be a pellet comprising the polymer blend as described above. Also disclosed herein is a coating for an article, wherein the coating comprises the polymer blend as described hereinabove.

### Test Methods

### Density

Density is measured in accordance with ASTM D792, Method B and expressed in grams/cubic centimeter (g/cc or g/cm³).

### Melt Index

Melt index (I₂ or MI) is measured in accordance with ASTM D1238 at 190 °C and 2.16 kg, Procedure B, and is expressed in grams eluted/10 minutes (g/10 min or dg/min).

### Nuclear Magnetic Resonance (¹H NMR)

The term "nuclear magnetic resonance," (or NMR) as used herein, refers to a spectral analysis of a material or compound that shows the elemental and structural composition of the material or compound. Samples for proton NMR were prepared using 0.1-0.2 g sample in 2.75g of 30/70 wt/wt o-dichlorobenzene-d4 / perchloroethylene (ODCB-d4 / PCE) containing 0.001 M Cr, prepared in a 10mm tube. The samples were heated and vortexed at 115°C to ensure homogeneity. Single pulse proton spectra were acquired on a Bruker AVANCE 400 MHz spectrometer equipped with a Bruker Dual DUL high-temperature CryoProbe and a sample temperature of 120°C. PBD spectra were acquired with ZG pulse P1=5 us (~ 30° PW), 16 scans, AQ 1.64s, Di 14s. LDPE-PBD samples were run using ZG pulse with 90° PW, 32 scans, AQ 1.64s, D₁ 14s..

### Defect Count Performance

The Defect Count is a measure of defects that are detected in an extruded film using optical imaging technology in accordance with ASTM D7310-20 "Standard Practice for Defect Detection and Rating of Plastic Film Using Optical Sensors." The Defect Count is reported as the area of optical defects (in mm²) per 24.6 cm³ film with an effective circular diameter within defined series of ranges: 400-800 µm, 800-1600 µm, 1600 µm and above. It is measured by an Optical Control Systems Film Surface Analyzer FSA100 (OCS FSA100) optical imaging system. The OCS FSA100 optical imaging system consists of a lighting unit, a CCD line scan camera, and a computer with image/data analysis software version 10.4.1.7.

The OCS FSA100 optical imaging system detects defects as they obscure the transmission of halogen-based source light. Average greyscale was set to 170 with a threshold sensitivity setting of 35%. Additionally, the gain of the CCD system may be adjusted to compensate for film haziness. The imaging system creates a composite area of each defect by adding the defective pixels from each subsequent line scan. The system then reports the area of defects which were in user defined size ranges, based on the diameter of circles having equivalent areas.

### Examples

### Materials

Comparative Virgin Resin C (CA) was produced in accordance to the process details provided in WO2012166469, which is incorporated herein in its entirety.

Comparative Virgin Resin B (CB) was produced in a tubular reactor comprising three reaction zones. Ethylene was injected in the front of the first reaction zone, and chain transfer agent (CTA) was injected into the first reaction zone. Additional ethylene and CTA were injected in the side of the second reaction zone. CTA was introduced to control polymer molecular weight and achieve a target melt index (I2) value. A suitable CTA may comprise alkane, alkene, ketone, or aldehyde functionality, such as propylene, isobutane, n-butane, 1-butene, methyl ethyl ketone, acetone, and propionaldehyde. CB was made in a partially closed-loop, dual recycle, highpressure, LDPE production system.

LDPEs (Inventive examples 1-3) were formed according to the presently described methods. PB B-100, as described above, was used as the mixture of hydrocarbon-based molecules. The mixture of hydrocarbon-based molecules was combined in the amounts shown in Table 1A with ethylene. 50 wt. % of the ethylene was fed to the front inlet of the tubular reactor and 50 % of the ethylene was fed to the first side inlet of the tubular reactor, at a reactor inlet pressure of about 2100-2300 bar and a peak temperature in all reaction zones of about 295-310 °C. Initiator was fed a first initiator injection point upstream of the first side inlet. The mixture of hydrocarbon-based molecules was fed to the front inlet of the reactor.

A summary of the properties of the polyethylene resins used in the examples is disclosed in Table 1.

**Table 1: Properties of Virgin Polyethylene Resins (Supplier - Dow Inc.)**

| **Sample** | **Description** | **Density (g/cc)** | **MI (g/10 mins)** | **Alkenes per 1000 carbons** | **Wt. % hydrocarbon molecule** |
|---|---|---|---|---|---|
| Comparative Virgin Resin A (**CA**) | LLDPE | 0.920 | 0.5 | 0.215 | 0 |
| Comparative Virgin Resin B (**CB**) | LDPE | 0.928 | 0.35 | 0.04 | 0 |
| Inventive Virgin Resin 1 (**I1**) | LDPE | 0.921 | 0.25 | 0.52 | 1.4 |
| Inventive Virgin Resin 2 (**I2**) | LDPE | 0.923 | 6 | 0.69 | 2.2 |
| Inventive Virgin Resin 3 (**I3**) | LDPE | 0.924 | 8 | 0.70 | 2.3 |

A summary of the properties of the recycled polymer (PCR-polyethylene) used in the examples is disclosed in Table 2. The PCR-polyethylenes were originated according to ISO 14021.

**Table 2: Properties of PCR Resins**

| **PCR Sample** | **Density (g/cc)** | **MI (g/10 mins)** | **Defect Count** | **Supplier** |
|---|---|---|---|---|
| PCR 1 | 0.925 | 0.7 | 160 | Avangard^{™} |
| PCR 2 | 0.917 | 2.4 | 2250 | Avangard^{™} |
| PCR 3 | 0.925 | 1.2 | 456 | Saica^{™} |
| PCR 4 | 0.922 | 2.0 | 392 | Saica^{™} |

2 mil thick blown films were produced for Defect Counts as follows. Gravimetric feeders dosed resin formulations into a Labtech LTE20-32 twin screw extruder at rate of 15 lbs/hr. From the extruder the resin formulation is conveyed into the 2" die diameter die with gap of 1.0 mm. The LTE feed throat was set to 182 °C and the remaining barrel, conveying portion, and die temperature were set and maintained to 215 °C. Pressurize ambient air inflated the film bubble to a 2.5 blow-up ratio. A dual lip air ring driven by a variable speed blower is used for all experiments. The frost line height (FLH) was maintained between 8.7 and 11.3 inches. Film thickness was targeted at 2 mils and was controlled within 15% by adjusting the nip roller speed. The films are wound up into a roll.

**Table 3: Defect Count for film Samples**

| **Films** | **Virgin resin** | **0 wt% PCR added** | **PCR 1, wt%** | | **PCR 2, wt%** | | **PCR 3, wt%** | | **PCR 4, wt%** | |
|---|---|---|---|---|---|---|---|---|---|---|
| | | | **30** | **70** | **30** | **70** | **30** | **70** | **30** | **70** |
| CFA | CA | 7.9 | 369 | 279 | 795 | 1980 | 190 | 370 | 181 | 253 |
| CFB | CB | 21 | 326 | 415 | 52 | 484 | 72 | 233 | 122 | 182 |
| IF1 | I1 | 1.3 | 14 | 46 | 5.0 | 16 | 15 | 49 | 25 | 66 |
| IF2 | I2 | 2.7 | 300 | 300 | 391 | 1060 | 119 | 175 | 165 | 224 |
| IF3 | I3 | 0.9 | 129 | 232 | 263 | 1100 | 89 | 202 | 119 | 237 |

As shown above in Table 3, inventive film IF1, which included PCR and a virgin LDPE resin (**I1**) comprising hydrocarbon molecules having at least three terminal alkenes, produced a greatly reduced gel count across various gel sizes in comparison to the comparative films CFA-B, which included a virgin LLDPE and LDPE resins without the hydrocarbon molecules having at least three terminal alkenes. While inventive films I2 and I3 had higher gel count than I1, the virgin resins in inventive films I2 and I3 produced reduced gel count. This gel reduction is demonstrated when comparing inventive films I2 and I3 to comparative film CA.

The numerical ranges disclosed herein include all values from, and including, the lower and upper value. For ranges containing explicit values (e.g., from 1 or 2, or 3 to 5, or 6, or 7), any subrange between any two explicit values is included (e.g., the range 1-7 above includes subranges of from 1 to 2, from 2 to 6, from 5 to 7, from 3 to 7, from 5 to 6, etc.).

Unless stated to the contrary, implicit from the context, or customary in the art, all parts and percents are based on weight and all test methods are current as of the filing date of this disclosure.

The term "comprising", "including", "having" and their derivatives, are not intended to exclude the presence of any additional component, step, or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term "consisting essentially of" excludes from the scope of any succeeding recitation any other component, step, or procedure, excepting those that are not essential to operability. The term "consisting of" excludes any component, step, or procedure not specifically delineated or listed. The term "or", unless stated otherwise, refers to the listed members individually as well as in combination. Use of the singular includes use of the plural and vice versa. Having described the subject matter of the present disclosure in detail and by reference to specific embodiments thereof, it is noted that the various details disclosed herein should not be taken to imply that these details relate to elements that are essential components of the various embodiments described herein, even in cases where a particular element is illustrated in each of the drawings that accompany the present description. Further, it will be apparent that modifications and variations are possible without departing from the scope of the present disclosure, including, but not limited to, embodiments defined in the appended claims. More specifically, although some aspects of the present disclosure are identified herein as preferred or particularly advantageous, it is contemplated that the present disclosure is not necessarily limited to these aspects.

## Claims

1. A polymer blend comprising:
virgin ethylene-based polymer formed by high pressure (greater than or equal to 100 MPa and less than or equal to 400 MPa), free-radical polymerization of ethylene and one or more hydrocarbon-based molecules, each hydrocarbon-based molecule comprising three or more terminal alkene groups; and
recycled ethylene-based polymer having a density of 0.910 to 0.940 g/cc and a melt index (I₂) of 0.3 to 5 dg/min as measured according to ASTM D1238 (190C, 2.16 Kg).

2. The polymer blend of claim 1, wherein the polymer blend comprises 15 to 95 wt.% of the recycled ethylene-based polymer, and 5 to 85 wt.% of the virgin ethylene-based polymer.

3. The polymer blend of claim 1 or 2, wherein the hydrocarbon-based molecules comprise Structure I: 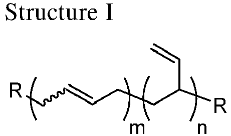 wherein R = H or OH, n is from 3 to 160, and m is from 0 to 50.

4. The polymer blend of claim 1 or 2, wherein the hydrocarbon-based molecules comprise Structure II: 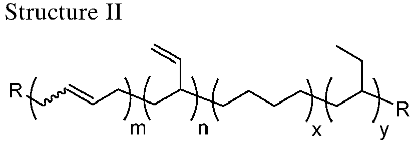 wherein R = H or OH, n is from 3 to 160, and m is from 0 to 50; x is from 0 to 50, and y is from 0 to 160.

5. The polymer blend of claim 3 or 4, wherein the mixture of hydrocarbon-based molecules based on Structures I or II has a molecular weight distribution (MWD = Mw/Mn) from 1.2 to 10.

6. The polymer blend of any one of claims 1 to 5, wherein the virgin ethylene-based polymer comprises, in polymerized form, from 95 wt% to 99.98 wt% of ethylene and from 0.02 wt% to 5.0 wt% of the mixture of hydrocarbon-based molecules, based on the total weight of the ethylene-based polymer.

7. The polymer blend of any one of claims 1 to 6, wherein the virgin ethylene-based polymer has an alkenes content from 0.05/1000 carbons to 3.0/1000 carbons, or from 0.07/1000 carbons to 2.0/1000 carbons, or from 0.1/1000 carbons to 1.2/1000 carbons.

8. The polymer blend of any one of claims 1 to 7, wherein the virgin ethylene-based polymer composition is a low density polyethylene comprising, in polymerized form, ethylene monomer and the hydrocarbon-based molecules.

9. The polymer blend of any one of claims 1 to 8, wherein the virgin ethylene-based polymer has a melt index (MI) from 0.1 to 10.0 dg/min.

10. An article comprising the polymer blend of any one of claims 1 to 9.

11. The article of claim 10, wherein the article is a film or a coated article.

12. The article of claim 11, wherein the film is a monolayer or multilayer film.

13. A coating comprising the polymer blend of any one of claims 1 to 9.
